# EUROPEAN PATENT SPECIFICATION

(11) **EP 3 681 665 B1**
(45) Date of publication and mention of the grant of the patent: **06.10.2021**
(21) Application number: 18752870.8
(22) Date of filing: 06.08.2018
(51) Int. Cl.: B23K 9/29, B23K 9/32, B23K 10/00

(54) **WELDING OR PLASMA TORCH WITH AN INTERFACE COMPRISING GUIDE MEANS WITH SPHERICAL PORTIONS, AND DEVICE EMPLOYING THIS TORCH**
SCHWEISS- ODER PLASMABRENNER MIT EINER SCHNITTSTELLE MIT FÜHRUNGSMITTELN MIT SPHÄRISCHEN ABSCHNITTEN UND VORRICHTUNG ZUR ANWENDUNG DIESES BRENNERS
TORCHE DE SOUDAGE OU DE PLASMA AVEC UNE INTERFACE COMPORTANT DES MOYENS DE GUIDAGE À PORTIONS SPHÉRIQUES ET DISPOSITIF UTILISANT CETTE TORCHE

(30) Priority: 11.09.2017 IT 201700101416
(43) Date of publication of application: 22.07.2020
(73) Proprietor: Trafimet Group S.p.A., 36020 Castegnero (VI) (IT)
(72) Inventor: IMI, Attilio, 33010 Pagnacco (UD) (IT)
(74) Representative: Ziliotto, Tiziano
(86) International application number: PCT/IB2018/055899
(87) International publication number: WO 2019/048951

(56) References cited:
- EP-A2- 0 983 818
- JP-A- 2016 068 119
- US-A1- 2007 284 354

## Description

The present invention concerns the technical field of the welding of metallic materials.

More specifically, the present invention concerns a welding or plasma torch suited to be held by a user according to the preamble of claim 1 (see for example EP 0 983 818 A2).

The present invention concerns also a welding or plasma device employing said torch.

### DESCRIPTION OF THE STATE OF THE ART

The use of technologies for welding and/or cutting and/or marking materials, typically metallic materials, is known in several sectors, especially in the industrial sector.

These technologies require the use of special devices used by specialized operators who work on the material to be welded and/or cut and/or marked. These devices of the known type exploit the effect produced by the generation of an electric arc. The generation process of an electric arc can be exploited in a first case to weld metallic materials, with or without weld material.

Some welding technologies of the known type are grouped and referred to with the acronym GMAW (Gas Metal Arc Welding), meaning metal arc welding with a shielding gas. More specifically, reference can be made to the MIG (Metal-Inert-Gas) or the MAG (Metal-Active-Gas) technology, which differ from each other substantially for the different gas used for protecting the welding bath. Another welding technology of the known type is the TIG (Tungsten Inert Gas) welding technology.

In other cases, the generation process of an electric arc can be exploited to create plasma that cuts or marks a material, typically a metal piece.

In any case, said devices comprise an element suited to be handled by the operator, known under the name of torch, a first end, or front end, of which is intended to be used for the real welding operation by positioning it in proximity to the welding area.

A torch cable, or several, preferably grouped, cables suited to connect the torch to one or more power supply units exit from the opposite end, or rear end, of the torch.

According to the technology used, in fact, one or more fluids are conveyed to the torch, for example a shielding gas for TIG welding and/or a cooling fluid, for example water and/or air, and/or the welding wire through a corresponding wire feeding unit, in the case of MIG welding.

The device thus typically comprises a power supply unit, or generator, suited to supply power to the torch for the generation of the arc, and one or more units suited to feed the torch with the fluids necessary for operation, for example a gas cylinder, an air compressor and/or a hydraulic circuit for the supply of cooling water.

Furthermore, between said unit/units and the torch there is a power supply line, meaning the above mentioned torch cable, which is suited to electrically connect the generator to the torch itself. Furthermore, said fluids necessary for the operation of the device, for example gas and/or air and/or cooling water, are conveyed through the same cable.

One end of said cable is thus connected to the torch, while the other end of the cable can be connected to the power supply unit/s through a suitable removable connector.

The torch is typically provided with a grip whose ergonomic shape makes it easier to handle it for the operator. The torch typically has an elongated shape with a centre gripping area and said front and rear ends.

The rear end of the grip, from which the torch cable exits, is an important element for the development of welding torches. This is due to the fact that in this area the cable passes from a condition in which it is constrained (inside the grip) to a condition in which it is substantially free to move. Being subject to the force of gravity and having a weight which is not always negligible, the torch cable tends to bend abruptly towards the ground at the point where it exits from the grip.

In this way, bottlenecks can be created over time and, for example, the welding wire may slide with difficulty or the gas may not flow smoothly, etc. Even worse, the torch cable may be damaged and need replacing.

Furthermore, a problem often arises in relation to the handling of the torch. In fact, the torch cable hangs from behind the grip, thus altering the balance of the torch and representing a cause of fatigue for the operator and/or having a negative effect on the precise positioning of the torch and thus on the quality of the weld.

It is the object of the present invention to at least partially overcome the drawbacks mentioned above.

It is a first object of the invention to implement a system for connecting the torch to the torch cable which makes it possible to limit the creation of bottlenecks in the cable that exits from the torch itself.

It is another object of the invention to implement a system for connecting the torch to the torch cable which makes it possible to minimize any damage to the cable itself.

It is a further object of the invention to implement a system for connecting the torch to the torch cable which makes it possible to facilitate the handling of the torch during its use and/or to maintain an optimal welding quality.

It is a further object of the invention to implement a system for connecting the torch to the torch cable which is more reliable compared to the torches of known type.

### SUMMARY OF THE PRESENT INVENTION

The present invention is based on the general consideration that the problems found in the state of the art can be at least partially overcome by providing a welding or plasma torch comprising a main body suited to be held by a user and an interface area suited to receive a cable for connection to a power supply unit, wherein said interface area comprises guide means suited to guide the cable inside the main body, and wherein said guide means comprise a first sleeve connected to the main body through a spherical constraint element and a second sleeve connected to the first sleeve through a spherical constraint element.

A welding or plasma torch according to the present invention is defined in claim 1, said torch comprising a main body suited to be held by said user, a first area suited to carry out the welding operation and an interface area suited to receive at least one cable for connecting said torch to at least one power supply unit, wherein said interface area comprises guide means suited to guide said cable inside said main body, said guide means comprising at least one first sleeve externally associated with said cable, wherein said first sleeve comprises an external spherical surface portion suited to be inserted in a corresponding spherical seat obtained in said main body, and wherein said guide means comprise at least one second sleeve externally associated with said cable, wherein said second sleeve comprises an external spherical surface portion suited to be inserted in a corresponding spherical seat obtained in said first sleeve, wherein said first sleeve (22) is made up of two portions (22a, 22b) suited to be connected to each other through connection means (23).

Preferably, the first sleeve has a substantially cylindrical shape suited to enclose said cable.

Preferably, the second sleeve has a substantially cylindrical shape suited to enclose said cable.

In a preferred embodiment of the invention, the second sleeve is constituted by two portions suited to be connected to each other through connection means.

According to the present invention a welding or plasma device comprising such torch is defined in claim 5, this device comprising a torch, a power supply unit for said torch and a cable for connecting said torch to said power supply unit, wherein said torch is made as described above.

### BRIEF DESCRIPTION OF THE DRAWINGS

Further advantages, objects and characteristics, as well as further embodiments of the present invention are defined in the claims and are illustrated below by means of the following description, with reference to the attached drawings; in the drawings, corresponding or equivalent characteristics and/or component parts of the present invention are identified by the same reference numbers. More specifically, in the drawings:
- Figure 1 shows an axonometric view of a torch according to a preferred embodiment of the invention, as it can be possibly used in a welding device;
- Figure 2 shows the torch of Figure 1 isolated from the rest;
- Figure 3 shows a partially exploded view of the torch shown in Figure 2;
- Figure 4 shows a partially exploded view of the torch shown in Figure 2 from a different point of view;
- Figure 5 shows some elements of the torch shown in Figure 2;
- Figure 6 shows a first partially exploded view of Figure 5;
- Figure 7 shows a second partially exploded view of Figure 5;
- Figure 8 shows a plan view of the torch shown in Figure 2 without the cable;
- Figure 9 shows the sectional view according to line IX-IX of Figure 8;
- Figure 9A shows an enlarged detail of Figure 9;
- Figure 10 shows a side plan view of Figure 2 with the torch in a first operating position;
- Figure 11 shows a side plan view of Figure 2 with the torch in a second operating position;
- Figure 12 shows a top plan view of Figure 2 with the torch in a first operating position;
- Figure 13 shows a top plan view of Figure 2 with the torch in a second operating position;
- Figures from 14 to 16 show side plan views of Figure 2 with the torch in corresponding different operating positions;
- Figure 17 shows a top plan view of Figure 2 with the torch in a further operating position.

### DETAILED DESCRIPTION OF THE PRESENT INVENTION

Although the present invention is described below with reference to one of its embodiments which is illustrated in the drawings, the present invention is not limited to the embodiment described below and illustrated in the drawings. On the contrary, the embodiment described below and illustrated in the drawings clarifies some aspects of the present invention, the scope of which is defined in the claims.

The present invention has proved to be particularly advantageous in relation to the production of welding torches that employ the MIG technology. It should however be noted that the present invention is not limited to the production of welding torches of that kind. On the contrary, the present invention can be conveniently applied in all those cases requiring the use of devices that exploit the effect of the electric arc and the use of a torch by an operator.

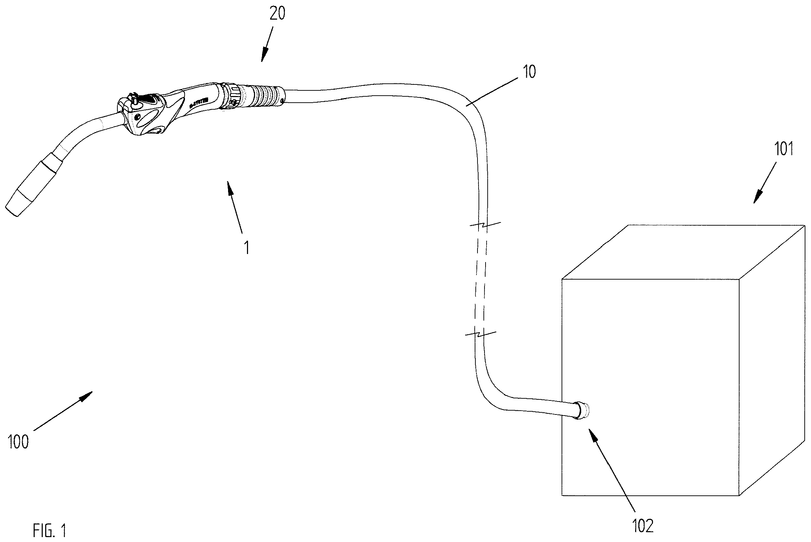

By way of example, the present invention can be extended to the TIG welding technology or the plasma technology. Figure 1 schematically shows a welding device 100 that employs MIG technology, in which a torch according to a preferred embodiment of the invention is used, said torch being indicated as a whole by 1 and illustrated in the Figures from 1 to 17.

The welding device 100 preferably comprises said welding torch 1 applied to a power supply unit 101. The power supply unit 101 is not described in detail, being of the known type, and preferably comprises a generator assembly suited to generate arc current (or power supply unit), a shielding gas feeding unit, a welding wire feeding and advancing unit and a cooling fluid feeding unit.

The power supply unit 101 and the torch 1 are preferably connected to a power supply line 10, or torch cable. The torch cable 10 preferably conveys the arc current, the shielding gas, the welding wire and a cooling fluid towards the torch 1.

The torch cable 10 preferably comprises an external protection casing or sheath. This type of embodiment is preferably used, for example, in water torches. In variant embodiments, the torch cable 10 can be generally defined by several cables, separate from and/or coaxial with one another, which enter the torch separately.

The possible embodiments of the torch cable are described here below by way of example, in relation to the technology used:
MIG WATER, according to which the torch cable is preferably obtained with a cable bundle, meaning pipes for the passage of water, a pipe for the passage of gas, a power cable with coaxial wire guide tube, the whole enclosed in a casing or sheath;
MIG AIR, according to which the torch cable comprises a coaxial cable with a gas and wire guide tube inside it and copper wires outside it, the whole enclosed in a rubber casing;
TIG AIR/WATER, according to which the torch cable preferably comprises a cable bundle of the type used in the MIG WATER technology described above; AIR PLASMA, according to which the torch cable may preferably comprise both a cable bundle and coaxial cables;
WATER PLASMA, according to which the torch cable preferably comprises a cable bundle.

Preferably, the torch cable 10 is removably connected to the power supply unit 101, preferably by means of a connector 102.

The torch 1 advantageously has an elongated and ergonomic shape suited to make it easier to hold it. Preferably, the torch 1 comprises a main body 4 suited to be held by the user, a first area 6 for welding and an interface area 8, typically opposite the first welding area 6, suited to receive the cable 10.

The main body 4 substantially develops along a main axis X.

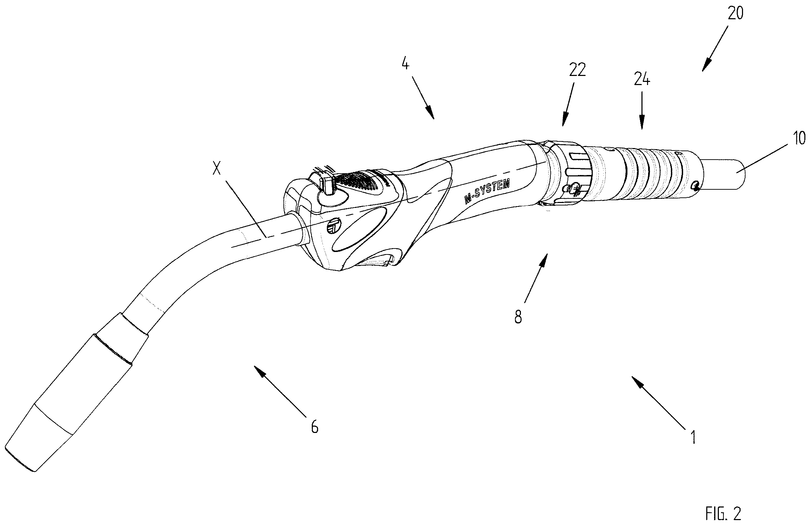

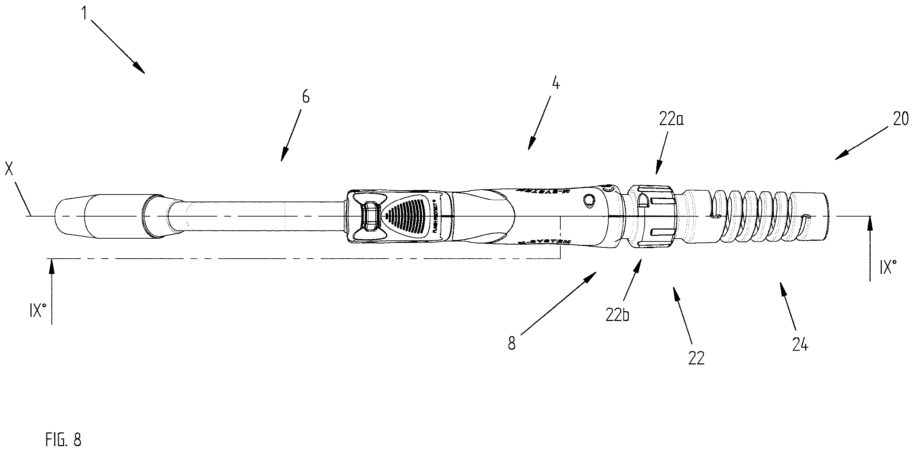

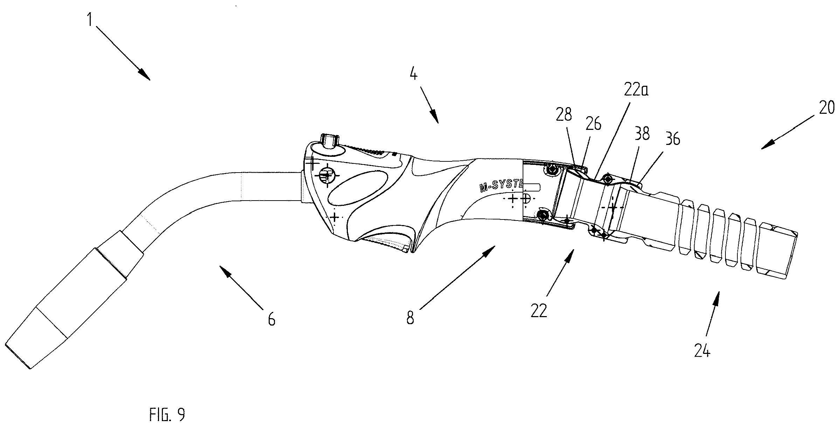

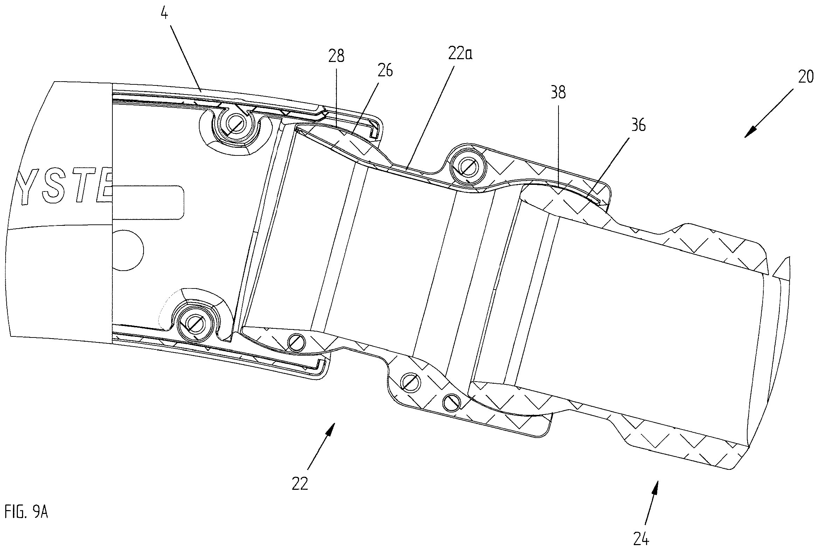

According to a preferred aspect of the present invention, the interface area 8 comprises guide means 20 suited to guide the cable 10 inside the main body 4. According to the preferred embodiment illustrated in Figures 1 to 17, the guide means 20 comprise a first sleeve 22 and a second sleeve 24, which are suited to receive and guide the cable 10 inside the torch 1.

The first sleeve 22 is connected to the main body 4 and the second sleeve 24 is connected to the first sleeve 22.

The first sleeve 22 preferably has a substantially cylindrical shape suited to enclose the cable 10 externally.

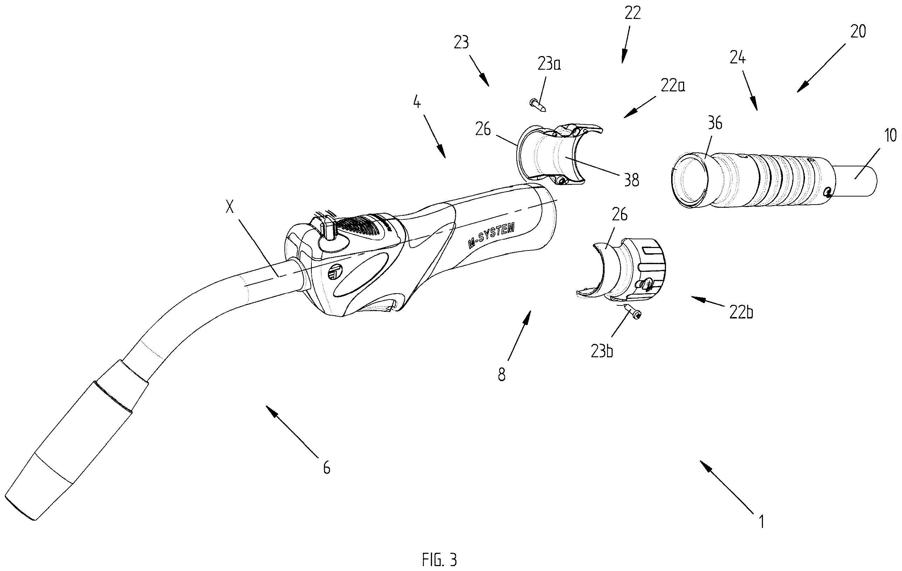

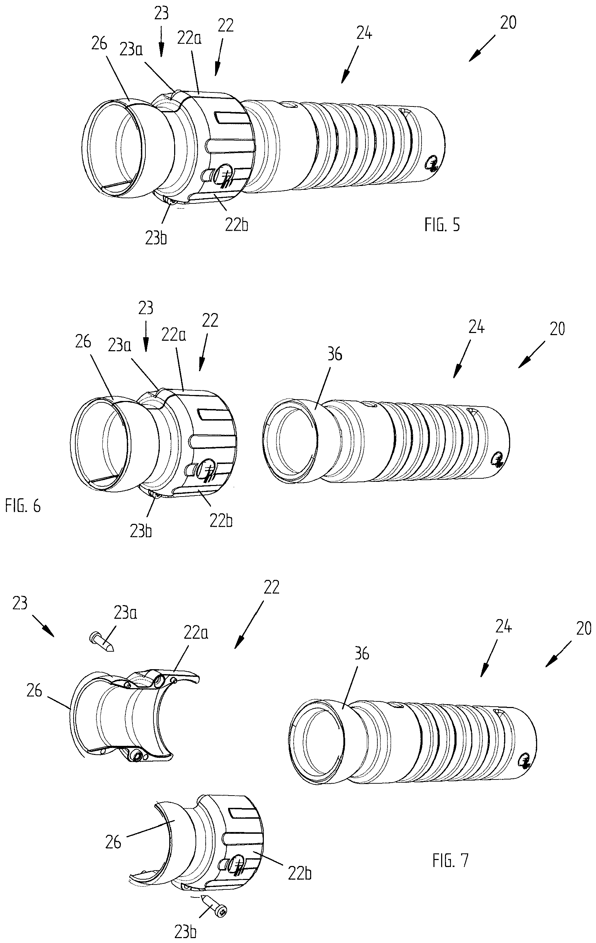

The first sleeve 22 is made in two portions 22a, 22b (Figures 3 and 7) suited to be coupled with each other through connection means 23, preferably screws 23a, 23b.

In variant embodiments, said connection means can be different, for example they may comprise a connection through mechanical interference, or a snap-on connection (bayonet), or the use of an adhesive substance.

Also the second sleeve 24 has a substantially cylindrical shape suited to enclose the cable 10 externally.

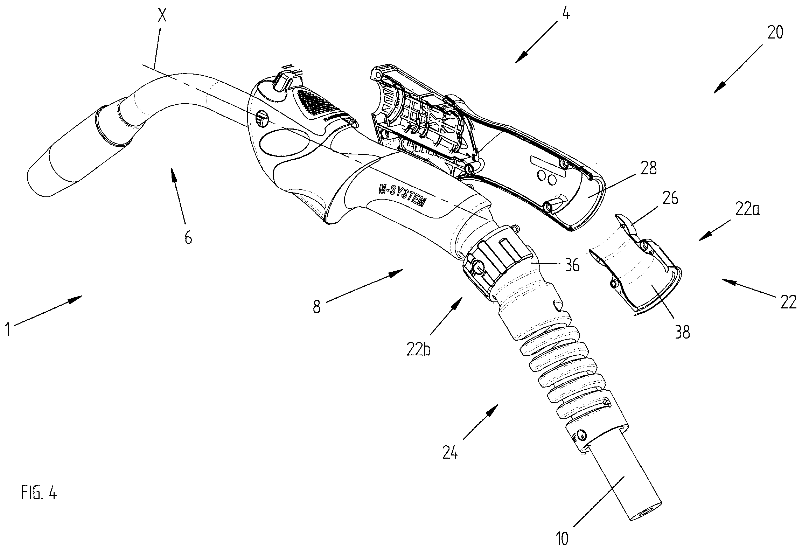

According to the present invention, the first sleeve 22 comprises an external spherical surface portion 26 suited to be inserted in a corresponding seat 28, preferably spherical, too, made in the main body 4 of the torch 1 (see, for example, Figure 4).

Advantageously, the first sleeve 22 is free to rotate with respect to the main body 4 of the torch 1 and to assume different positions, inclined with respect to the main body 4 itself.

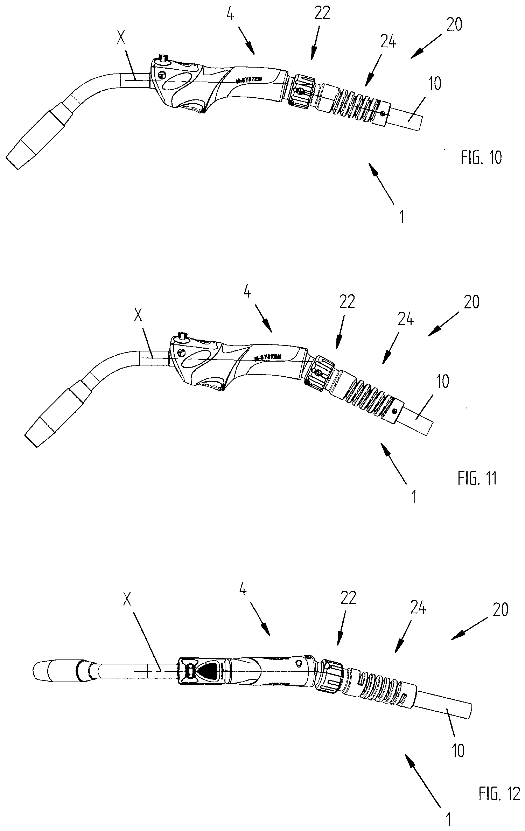

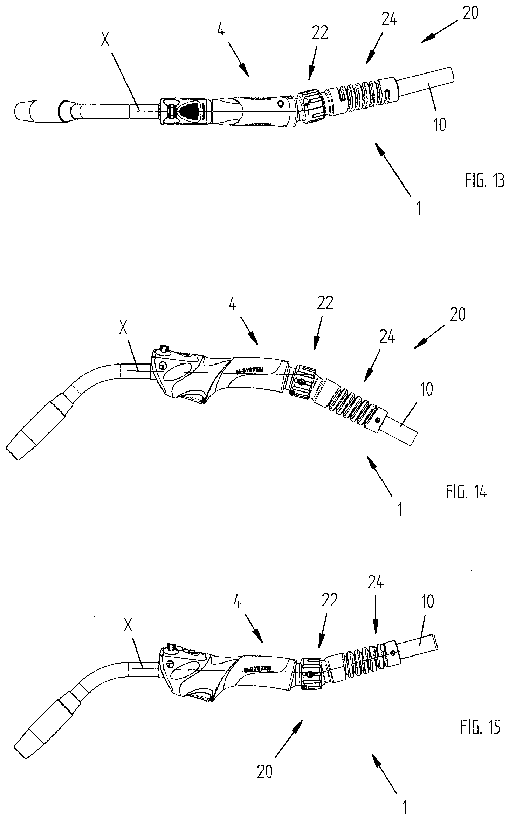

By way of example, in Figure 10 the first sleeve 22 is represented in a first operating position inclined downwards with respect to the main body 4 of the torch 1 with reference to a substantially vertical plane; in Figure 11 the first sleeve 22 is represented in an operating position even more inclined downwards with respect to the main body 4 of the torch 1 with reference to a substantially vertical plane; in Figure 12 the first sleeve 22 is represented in an operating position inclined to the right with respect to the main body 4 of the torch 1 with reference to a substantially horizontal plane; in Figure 13 the first sleeve 22 is represented in an operating position inclined to the left with respect to the main body 4 of the torch 1 with reference to a substantially horizontal plane.

It is evident that the first sleeve 22 and the main body 4 of the torch 1 can assume any mutual operating position in which they are inclined in space, thanks to the spherical shape of the mutual connection between the first sleeve 22 and the main body 4 of the torch 1 (spherical constraint element).

Advantageously, the cable 10 housed inside the first sleeve 22 exits from the main body 4 of the torch 1 with a smooth curvature. Furthermore, the fact that the first sleeve 22 can rotate around a spherical constraint element with respect to the main body 4 of the torch 1 leaves the maximum freedom of movement to the grip held by the user during welding operations which may include, for example, pendulum movements.

Advantageously, this system makes it possible to minimize the creation of bottlenecks and/or damages to the cable and to increase the reliability of the torch.

Furthermore, to advantage, this system makes it possible to improve the handling of the torch during its use by the user and thus to maintain an optimal welding quality.

According to the present invention, the first sleeve comprises the external spherical surface portion and the main body is provided with a corresponding spherical seat.

According to the present invention, the second sleeve 24 comprises an external spherical surface portion 36 suited to be inserted in a corresponding seat 38, preferably spherical, too, made in the first sleeve 22.

Advantageously, the second sleeve 24 is free to rotate with respect to the first sleeve 22 and to assume different positions, inclined with respect to the same.

In the embodiment described herein, the second sleeve comprises the external spherical surface portion and the first sleeve is provided with a corresponding spherical seat.

In a preferred variant embodiment, the second sleeve may preferably be made in two portions being coupled with each other through suitable connection means, analogously to what has been described above with reference to the first sleeve.

By way of example, in Figure 10 the second sleeve 24 is represented in an operating position which is substantially aligned with respect to the first sleeve 22; in Figure 14 the second sleeve 24 is represented in an operating position oriented downwards with respect to the first sleeve 22 with reference to a substantially vertical plane; in Figure 15 the second sleeve 24 is represented in an operating position which is oriented upwards with respect to the first sleeve 22 with reference to a substantially vertical plane.

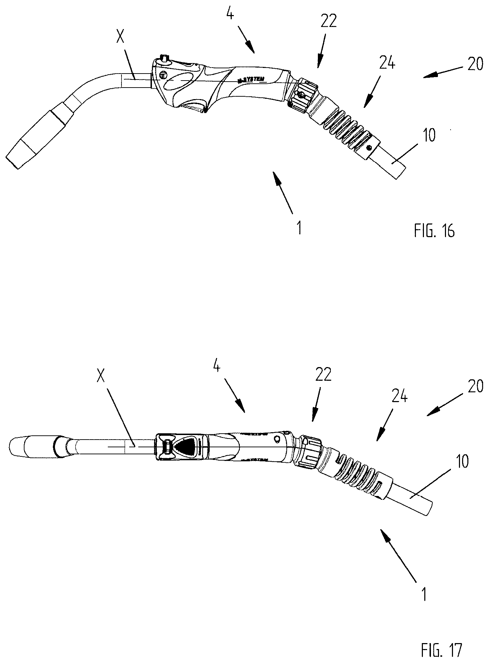

Figure 16 highlights the combined effect of the first and the second sleeve 22, 24, with the first sleeve 22 represented in an operating position inclined downwards with respect to the main body 4 of the torch 1 with reference to a substantially vertical plane and the second sleeve 24 is represented in an operating position oriented downwards with respect to the first sleeve 22 with reference to a substantially vertical plane.

Analogously, Figure 17 highlights the combined effect of the first and the second sleeve 22, 24, with the first sleeve 22 represented in an operating position inclined to the right with respect to the main body 4 of the torch 1 with reference to a substantially horizontal plane and the second sleeve 24 is represented in an operating position oriented to the right with respect to the first sleeve 22 with reference to a substantially horizontal plane.

It is evident that the second sleeve 24 and the first sleeve 22 can assume any mutual operating position in which they are inclined in space, thanks to the spherical shape of the mutual connection between the first sleeve 22 and the second sleeve 24 (spherical constraint element), analogously to what has been described above concerning the mutual connection between the first sleeve 22 and the main body 4 of the torch 1.

Advantageously, the cable 10 which is housed inside the first sleeve 22 and the second sleeve 24 exits from the torch with an even smoother curvature, avoiding the creation of bottlenecks as it happens in the systems of the known type. Furthermore, the fact that the second sleeve 24 can rotate around a spherical constraint element with respect to the first sleeve 22 further improves the freedom of movement of the grip held by the user during welding operations which may include, for example, pendulum movements.

Advantageously, the second sleeve 24 makes it possible to further minimize the creation of bottlenecks and/or damages to the cable during the use of the torch with respect to the torches of known type.

The result is increased reliability compared to the systems of known type. Furthermore, to advantage, the handling of the torch is further improved during use by the user. The quality of the weld is therefore guaranteed to a greater extent.

While two sleeves are used in the embodiment described above, in variant embodiments there may be further sleeves connected in series to one another and suited to receive the torch cable.

Preferably, the connection of the further sleeves in series takes place through respective spherical constraint elements of the type described above.

The sleeves can advantageously assume multiple inclined positions with respect to one another.

It has thus been shown, by means of the description provided, that the torch according to the present invention allows the set objects to be achieved. More specifically, the torch according to the present invention makes it possible to minimize the creation of bottlenecks and/or damages to the torch cable and to improve the handling of the torch during its use compared to the torches of known type.

Even if the present invention has been illustrated above by means of the detailed description of one of its embodiments which is represented in the drawings, the present invention is not limited to the embodiment described above and represented in the drawings; on the contrary, further variants of the embodiment described above fall within the scope of the present invention, which is defined in the claims.

## Claims

1. Welding or plasma torch (1) suited to be held by a user, said torch (1) comprising
a main body (4) suited to be held by said user,
a first area (6) suited to carry out the welding operation and
an interface area (8) suited to receive at least one cable (10) for connecting said torch (1) to at least one power supply unit (101),
**wherein** said interface area (8) comprises guide means (20) suited to guide said cable (10) inside said main body (4), said guide means (20) comprising at least one first sleeve (22) externally associated with said cable (10), **wherein** said first sleeve (22) comprises an external spherical surface portion (26) suited to be inserted in a corresponding spherical seat (28) provided in said main body (4),
and **characterized in that**
said guide means (20) comprise at least one second sleeve (24) externally associated with said cable (10), **wherein**
said second sleeve (24) comprises an external spherical surface portion (36) suited to be inserted in a corresponding spherical seat (38) provided in said first sleeve (22)
and **in that** said first sleeve (22) is made up of two portions (22a, 22b) suited to be connected to each other through connection means (23).

2. Torch (1) according to claim 1, **characterized in that** said first sleeve (22) has a substantially cylindrical shape suited to enclose said cable (10).

3. Torch (1) according to claim 1 or 2, **characterized in that** said second sleeve (24) has a substantially cylindrical shape suited to enclose said cable (10).

4. Torch (1) according to any of the preceding claims, **characterized in that** said second sleeve (24) is made up of two portions suited to be connected to each other through connection means.

5. Welding or plasma device (100) comprising a torch (1), a power supply unit for said torch (1) and a cable (10) for connecting said torch (1) to said power supply unit (101), **characterized in that** said torch (1) is made according to any of the preceding claims.

## Patentansprüche

1. Schweiß- oder Plasmabrenner (1), dazu geeignet, von einem Benutzer gehalten zu werden, wobei der besagte Brenner (1) einen Hauptkörper (4), der dazu geeignet ist, von dem besagten Benutzer gehalten zu werden, einen ersten Bereich (6), der dazu geeignet ist, den Schweißvorgang auszuführen, sowie einen Anschlussbereich (8), der dazu geeignet ist, wenigstens ein Kabel (10) für den Anschluss des besagten Brenners (1) an wenigstens eine Stromversorgungseinheit (101) aufzunehmen, umfasst,
**wobei** der besagte Anschlussbereich (8) Führungsmittel (20) umfasst, die dazu geeignet sind, das besagte Kabel (10) in den besagten Hauptkörper (4) zu leiten, wobei die besagten Führungsmittel (20) wenigstens eine erste Muffe (22) umfassen, die extern dem besagten Kabel (10) zugeordnet ist, wobei die besagte erste Muffe (22) einen sphärischen Außenflächenabschnitt (26) umfasst, der dazu geeignet ist, in eine entsprechende, in dem besagten Hauptkörper (4) befindliche sphärische Aufnahme (28) eingesetzt zu werden, und **dadurch gekennzeichnet, dass**
die besagten Führungsmittel (20) wenigstens eine zweite Muffe (24) umfassen, die extern dem besagten Kabel (10) zugeordnet ist, wobei
wobei die besagte zweite Muffe (24) einen sphärischen Außenflächenabschnitt (36) umfasst, der dazu geeignet ist, in eine entsprechende, in der besagten ersten Muffe (22) befindliche sphärische Aufnahme (38) eingesetzt zu werden, und **dadurch, dass** die besagte erste Muffe (22) aus zwei Abschnitten (22a, 22b) besteht, die dazu geeignet sind, durch Verbindungsmittel (23) miteinander verbunden zu werden.

2. Brenner (1) nach Patentanspruch 1, **dadurch gekennzeichnet, dass** die besagte erste Muffe (22) von im Wesentlichen zylindrischer Form sowie geeignet ist, das besagte Kabel (10) zu umschließen.

3. Brenner (1) nach Patentanspruch 1 oder 2, **dadurch gekennzeichnet, dass** die besagte zweite Muffe (24) von im Wesentlichen zylindrischer Form sowie geeignet ist, das besagte Kabel (10) zu umschließen.

4. Brenner (1) nach einem jeden der vorstehenden Patentansprüche, **dadurch gekennzeichnet, dass** die besagte zweite Muffe (24) aus zwei Abschnitten besteht, die dazu geeignet sind, durch Verbindungsmittel miteinander verbunden zu werden.

5. Schweiß- oder Plasmavorrichtung (100), einen Brenner (1), eine Stromversorgungseinheit für den besagten Brenner (1) und ein Kabel (10) für den Anschluss des besagten Brenners (1) an die besagte Stromversorgungseinheit (101) umfassend, **dadurch gekennzeichnet, dass** der besagte Brenner (1) nach einem jeglichen der vorstehenden Patentansprüche ausgeführt ist.

## Revendications

1. Torche de soudage ou à plasma (1), indiquée pour être maintenue par un utilisateur, ladite torche (1) comprenant
un corps principal (4) indiqué pour être maintenu par ledit utilisateur,
une première zone (6) indiquée pour réaliser l'opération de soudage et
une zone d'interface (8) indiquée pour recevoir au moins un câble (10) pour la connexion de ladite torche (1) à au moins une unité d'alimentation électrique (101),
où ladite zone d'interface (8) comprend des moyens de guidage (20) indiqués pour guider ledit câble (10) à l'intérieur dudit corps principal (4), lesdits moyens de guidage (20) comprenant au moins un premier manchon (22) associé extérieurement audit câble (10), où ledit premier manchon (22) comprend une partie superficielle sphérique extérieure (26) indiquée pour être insérée dans un logement sphérique correspondant (28) réalisé dans ledit corps principal (4),
et **caractérisée en ce que**
lesdits moyens de guidage (20) comprennent au moins un deuxième manchon (24) associé extérieurement audit câble (10), **où**
ledit deuxième manchon (24) comprend une partie superficielle sphérique extérieure (36) indiquée pour être insérée dans un logement sphérique correspondant (38) réalisé sur ledit premier manchon (22) et **en ce que** ledit premier manchon (22) est constitué de deux portions (22a, 22b) indiquées pour être reliées l'une à l'autre par des moyens de connexion (23).

2. Torche (1) selon la revendication 1, **caractérisée en ce que** ledit premier manchon (22) présente une forme essentiellement cylindrique indiquée pour renfermer ledit câble (10).

3. Torche (1) selon la revendication 1 ou 2, **caractérisée en ce que** ledit deuxième manchon (24) présente une forme essentiellement cylindrique indiquée pour renfermer ledit câble (10).

4. Torche (1) selon l'une quelconque des revendications précédentes, **caractérisée en ce que** ledit deuxième manchon (24) est constitué de deux portions indiquées pour être reliées l'une à l'autre par des moyens de connexion.

5. Dispositif de soudage ou à plasma (100) comprenant une torche (1), une unité d'alimentation électrique pour ladite torche (1) et un câble (10) pour la connexion de ladite torche (1) à ladite unité d'alimentation électrique (101), **caractérisé en ce que** ladite torche (1) est réalisée selon l'une quelconque des revendications précédentes.
